# FASCICULE DE BREVET EUROPEEN

(11) **EP 3 794 961 B1**
(45) Date de publication et mention de la délivrance du brevet: **01.09.2021**
(21) Numéro de dépôt: 19306129.8
(22) Date de dépôt: 19.09.2019
(51) Int. Cl.: A23N 15/02

(54) **ÉRAFLOIR STATIONNAIRE POUR UN ÉQUIPEMENT DE VINIFICATION**
STATIONÄRE ABBEERMASCHINE FÜR EINE WEINHERSTELLUNGSANLAGE
STATIONARY DESTEMMER FOR WINEMAKING EQUIPMENT

(43) Date de publication de la demande: 24.03.2021
(73) Titulaire: Bucher Vaslin, 49290 Chalonnes sur Loire (FR)
(72) Inventeur: DOINARD, Venceslas, 66440 TORREILLES (FR); LE BRECH, Laurent, 85170 LE POIRE SUR VIE (FR); SUPIOT, Guillaume, 85170 DOMPIERRE SUR YON (FR)
(74) Mandataire: Ipsilon

(56) Documents cités:
- EP-A1- 3 132 694
- CH-A- 174 925
- FR-A1- 2 511 849
- FR-A1- 2 626 202
- US-A- 4 301 931
- US-A1- 2007 006 564

## Description

### CONTEXTE DE L'INVENTION

La présente invention concerne des équipements de vinification à partir de fruits récoltés, tels que le raisin, et, de façon plus spécifique un érafloir utilisé dans de tels équipements pour retirer les rafles des fruits récoltés amenés à l'équipement.

Les fruits peuvent être récoltés manuellement ou à l'aide de machines à récolter les fruits prenant la forme d'une machine à récolter le raisin de type porté ou tracté qui comprend un châssis qui supporte plusieurs sous-systèmes embarqués pour traiter le raisin. Le raisin cueilli à la main forme des grappes sur lesquelles les grains sont rattachés à une tige centrale correspondant à la rafle. La vendange récoltée par une machine à récolter mécanique et amenée à l'équipement de vinification contient des grains seuls ainsi que des grains en grappes, notamment lorsque la machine à récolter ne contient pas elle-même d'unité d'éraflage. Les rafles ont un impact négatif sur le goût du vin si elles ne sont pas retirées au début du processus de vinification. Il est donc avantageux de réaliser une opération d'éraflage à l'arrivée du fruit récolté dans le vignoble. Typiquement, cette opération est réalisée à l'aide d'érafloirs mécaniques non mobiles pendant l'éraflage. Dans ce contexte, ils sont appelés « érafloirs stationnaires ». Ce terme n'exclut pas les érafloirs pouvant être déplacés d'une opération d'éraflage à l'autre.

L'érafloir retire la rafle ou les tiges par rapport aux grains de la grappe de raisin. Un érafloir peut comprendre une boîte ou une structure de type boîte qui se déplace de façon oscillante à l'intérieur d'un châssis. Les grappes, les grains (raisin) et la matière autre que le raisin sont amenés à l'orifice d'admission de la structure de type boîte qui est secouée à l'aide d'un entraînement à excentrique pour séparer les grains de la rafle et des tiges. Les grains sont expulsés à travers des trous formés dans les parois inférieure et/ou supérieure de la boîte et dimensionnés de façon à permettre le passage des grains. La rafle (tige centrale de la grappe) et les tiges sont expulsées à travers un orifice de sortie situé à l'extrémité de la boîte. La matière autre que le raisin est également appelée « MOG » et comprend la matière telle que les feuilles, les tiges, les débris de bois, etc. récoltée pendant la récolte manuelle ou mécanique.

Le document EP 3132694 A1 expose un érafloir stationnaire à utiliser dans un vignoble. L'érafloir comprend une structure tubulaire (c'est-à-dire une boîte) qui se déplace à l'intérieur d'un châssis support fixe. La boîte comprend une paire d'oreilles qui s'étendent vers le haut hors de la boîte au niveau de l'extrémité d'admission de la boîte. Ces oreilles ont des trous à travers lesquels une broche de liaison de la boîte au châssis support est insérée. La boîte se déplace de façon oscillante autour de l'axe longitudinal de la ou des broches qui sont insérées à travers les trous dans les oreilles de la boîte. Le mouvement vertical et par suite l'action d'éraflage en découlant réalisée sur le fruit dans la boîte sont minimaux à proximité de l'axe d'oscillation et augmentent à mesure que le fruit s'approche de l'autre extrémité de la boîte.

### RÉSUMÉ DE L'INVENTION

A cet effet, l'invention a pour objet un érafloir à utiliser de façon stationnaire dans un équipement de vinification, comprenant :
un châssis configuré pour être installé de façon stationnaire dans l'équipement de vinification ;
une boîte supportée par le châssis, la boîte comprenant un orifice d'admission pour recevoir des grains et autre matière (MOG) ;
un entraînement à excentrique relié à la boîte pour déplacer la boîte de façon oscillante à l'intérieur du châssis ;
**caractérisé par** :
au moins une liaison supérieure interconnectant la boîte et le châssis, ladite liaison supérieure comprenant une première extrémité reliée de façon pivotante au châssis, une seconde extrémité reliée de façon pivotante à la boîte et un axe longitudinal ; et
au moins une liaison inférieure interconnectant la boîte et le châssis, ladite liaison inférieure comprenant une première extrémité reliée de façon pivotante au châssis, une seconde extrémité reliée de façon pivotante à la boîte et un axe longitudinal ;
dans lequel, lorsque vus depuis un côté, l'axe longitudinal de chaque liaison supérieure et l'axe longitudinal de chaque liaison inférieure se croisent en un axe pivot virtuel positionné en amont de l'orifice d'admission par rapport à la boîte, par rapport à une direction de déplacement des grains et de la matière (MOG) à travers la boîte.

L'axe pivot virtuel est positionné en amont de l'orifice d'admission de la boîte pris par rapport à une direction de déplacement des grains et de la matière à travers la boîte depuis l'orifice d'admission de la boîte.

L'entraînement à excentrique et les connexions des liaisons supérieure et inférieure sont configurés de telle sorte que l'axe pivot virtuel reste en amont de l'orifice d'admission pour chaque position de cet entraînement. Cette structure permet de réaliser un important mouvement d'oscillation depuis la partie d'admission de la boîte et ne nécessite pas de liaison occupant un espace important ou d'oreilles s'étendant dans la zone placée avant l'érafloir.

Selon un mode de réalisation de l'invention, en fonctionnement, l'orifice d'admission de la boîte se déplace de façon oscillante par l'intermédiaire à la fois d'un mouvement de pivotement et d'un mouvement de translation.

Dans un mode avantageux de l'invention, chaque liaison supérieure et chaque liaison inférieure sont reliées de façon pivotante à la boîte au niveau d'un emplacement situé à côté de l'orifice d'admission de la boîte. Par "à côté de l'orifice d'admission", on entend au niveau de l'orifice d'admission.

Dans un autre mode de réalisation de l'invention, la boîte a une paire de côtés opposés. La au moins une liaison supérieure comprend une paire de liaisons supérieures, chaque liaison supérieure étant reliée de façon pivotante à un côté respectif. La au moins une liaison inférieure comprend une paire de liaisons inférieures, chaque liaison inférieure étant reliée de façon pivotante à un côté respectif.

Selon un autre mode de réalisation encore de l'invention, la boîte comprend une paroi supérieure, une paroi inférieure et une paire de parois latérales opposées. La paroi supérieure et la paroi inférieure ont chacune une pluralité d'ouvertures qui sont dimensionnées pour permettre le passage des grains à travers elles. Chacune des liaisons supérieures et des liaisons inférieures a une extrémité qui est reliée de façon pivotante à une des parois latérales respectives.

Dans un autre mode de réalisation encore de l'invention, la boîte comprend une paroi inférieure et un plan central s'étendant dans le sens de la longueur qui se situe généralement parallèlement à la paroi inférieure. Chacune des liaisons supérieures et chacune des liaisons inférieures se situent selon un angle aigu par rapport au plan central. Chaque liaison supérieure forme un angle aigu avec le plan central. Il en est de même de chaque liaison inférieure.

Dans un autre mode de réalisation encore de l'invention, le mouvement de la boîte (en fonctionnement) oscille entre une position inférieure dans laquelle le plan central s'incline dans une direction orientée vers le bas en direction d'un orifice de sortie de la boîte et une position supérieure dans laquelle le plan central se situe généralement horizontalement.

Selon un mode de réalisation de l'invention, lorsque l'érafloir est dans un état dit central, l'angle aigu entre le plan central et chaque liaison supérieure est identique à l'angle aigu entre le plan central et chaque liaison inférieure ou différent de lui.

Selon un mode de réalisation de l'invention, la somme des angles aigus entre le plan central et chaque liaison supérieure et inférieure est inférieure à 90°.

Dans encore un autre mode de réalisation de l'invention, chaque liaison supérieure et chaque liaison inférieure a une longueur réglable. En variante, chaque liaison supérieure et chaque liaison inférieure a une longueur fixe.

Dans un autre mode de réalisation de l'invention, la boîte a un orifice de sortie et, en fonctionnement, l'amplitude de mouvement de la boîte au niveau de l'extrémité d'admission est inférieure à l'amplitude de mouvement de la boîte au niveau de l'orifice de sortie.

Dans encore un autre mode de réalisation de l'invention, la boîte a un orifice de sortie ayant une aire ou surface inférieure à l'aire ou surface de l'orifice d'admission.

Dans un autre mode de réalisation encore de l'invention, la boîte qui comprend une paroi supérieure, une paroi inférieure et des parois latérales a un orifice de sortie de hauteur plus importante au niveau du centre de l'orifice de sortie qu'à côté des parois latérales.

Selon un mode de réalisation, la boîte ayant un orifice de sortie délimité par des bords, les bords dits supérieur et inférieur de l'orifice de sortie de la boîte sont incurvés.

### BRÈVE DESCRIPTION DES DESSINS

Les caractéristiques et avantages de la présente invention susmentionnés ainsi que d'autres et la façon de les obtenir apparaîtront plus clairement, tout en permettant une meilleure compréhension de l'invention, en référence à la description suivante de modes de réalisation de l'invention prise conjointement avec les dessins joints, dans lesquels :
la figure 1 est une vue en perspective d'une partie d'un érafloir comprenant une boîte oscillante rectangulaire, ledit érafloir étant destiné à une utilisation stationnaire dans un équipement de vinification ;
la figure 2 est une vue de côté en coupe de l'érafloir illustré sur la figure 1 ;
la figure 3 est une autre vue de côté en coupe similaire à la figure 2, illustrant l'axe pivot virtuel positionné en amont par rapport à l'extrémité d'admission de la boîte ;
la figure 4 est une vue en perspective de face d'un second type de boîte à utiliser dans l'érafloir de la figure 1 ; et
la figure 5 est une vue en perspective de derrière de la boîte de la figure 4.

Des signes de référence correspondants indiquent des parties correspondantes sur l'ensemble des multiples vues. Les exemples exposés ici illustrent des modes de réalisation de l'invention et de tels exemples ne sont pas conçus comme limitant la portée de l'invention de n'importe quelle façon.

### DESCRIPTION DÉTAILLÉE DE L'INVENTION

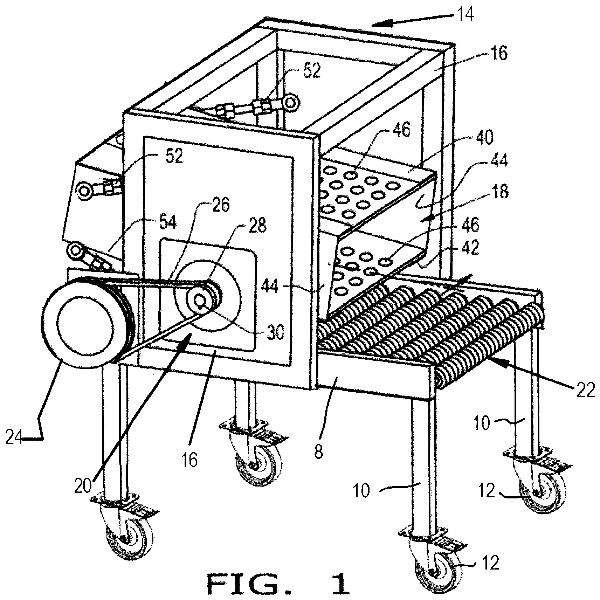

En référence maintenant aux dessins, et plus particulièrement à figure 1, est illustré un érafloir 14 configuré pour une utilisation stationnaire dans un équipement de vinification recevant des chargements de fruits récoltés manuellement et/ou mécaniquement. L'érafloir 14 comprend un bâti 8 supportant de multiples éléments différents et pouvant faire partie d'un système de nettoyage de fruits élaboré. Le système de nettoyage peut comprendre d'autres éléments, tels qu'une table de tri et un ventilateur de nettoyage (non illustré sur la figure 1).

L'érafloir 14 est utilisé pour retirer la rafle centrale ou les tiges par rapport au raisin et comprend généralement un châssis 16, une boîte 18, un entraînement à excentrique 20 et éventuellement également un tapis de transport, tel qu'un ensemble de rouleaux de transport 22.

Le châssis 16 est installé sur le bâti 8, équipé de pieds 10. Les pieds peuvent être pourvus de roues 12 permettant de déplacer l'érafloir à la fin des opérations d'éraflage. Le châssis 16 de l'érafloir peut être n'importe quelle combinaison adaptée d'éléments structurels, de feuilles métalliques, etc. Le châssis 16 illustré sur la figure 1 est illustré comme ayant des éléments tubulaires carrés supportant des feuilles métalliques ou des plaques sur les côtés opposés du châssis. La paroi supérieure et les deux autres parois latérales sont illustrées comme étant ouvertes dans le mode de réalisation illustré sur la figure 1. D'autres modes de réalisation et configurations sont également possibles.

Les rouleaux de transport 22 sont positionnés en dessous de la boîte 18. Le raisin (appelé de façon générique « grains » étant donné que l'érafloir 14 pourrait potentiellement être utilisé pour récolter d'autres types de grains en grappe avec une rafle centrale et/ou des tiges) est expulsé à travers les ouvertures dans la boîte (décrite ci-dessous), atterrit sur les rouleaux de transport 22 et est transporté en aval par les rouleaux de transport pour traitement ultérieur. Les rouleaux de transport peuvent être configurés comme des rouleaux calibreurs permettant le passage des éléments de la taille des grains, ces grains pouvant ensuite être reçus dans un conteneur de raisin en dessous du bâti 8 ou sur un autre tapis de transport pour poursuite du traitement dans l'établissement viticole. Entre-temps, les rafles et la matière MOG sont reçues sur le dessus des rouleaux 22 et transportées par ceux-ci jusqu'à un conteneur de déchets (non illustré) placé à l'extrémité de l'érafloir 14.

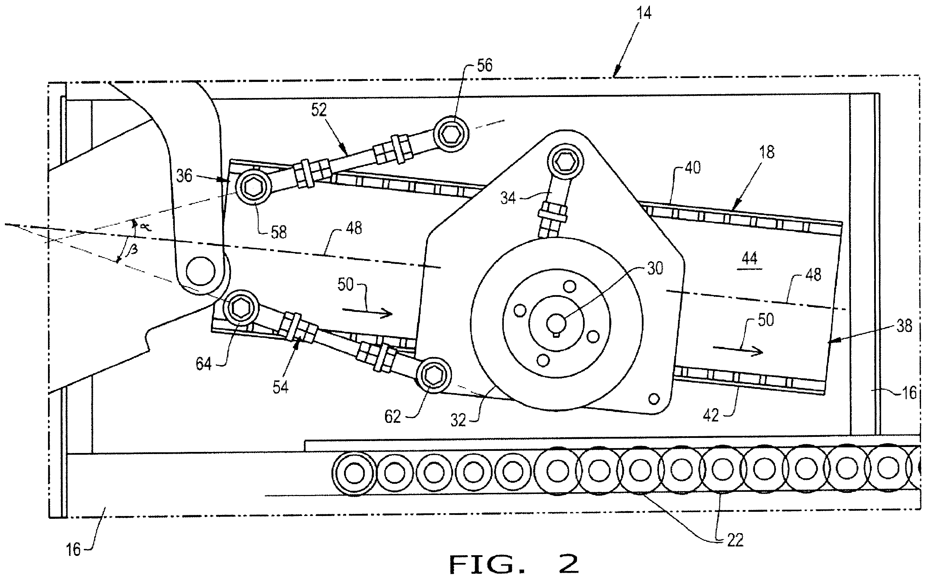

L'entraînement à excentrique 20 est relié à la boîte 18 et fournit à la boîte 18 un mouvement oscillant dans les directions vers le haut et vers le bas. Dans le mode de réalisation illustré sur les figures 1 et 2, un moteur électrique (non visible) entraîne une poulie d'entraînement 24 reliée à son tour via une courroie d'entraînement 26 à une poulie entraînée 28. Bien sûr, la source d'alimentation en courant peut être un moteur électrique, hydraulique, ou autre. La poulie entraînée 28 est couplée, via un arbre 30, à un disque 32 dit disque à excentrique. Une liaison 34, telle qu'une bielle, a une extrémité qui est reliée en rotation de manière excentrée, c'est-à-dire en un emplacement écarté du centre de rotation du disque 32, au disque 32 et une extrémité opposée qui est reliée en rotation à la boîte 18 au niveau d'un point de connexion adapté. La rotation du disque 32 provoque donc via la liaison 34 des mouvements oscillants vers le haut et vers le bas de la boîte 18. Cet entraînement à excentrique 20 s'apparente à un système de type bielle manivelle qui transforme le mouvement de rotation du disque en un mouvement de va-et-vient, c'est-à-dire en un mouvement alternatif de l'extrémité de la liaison 34 de la boîte 18.

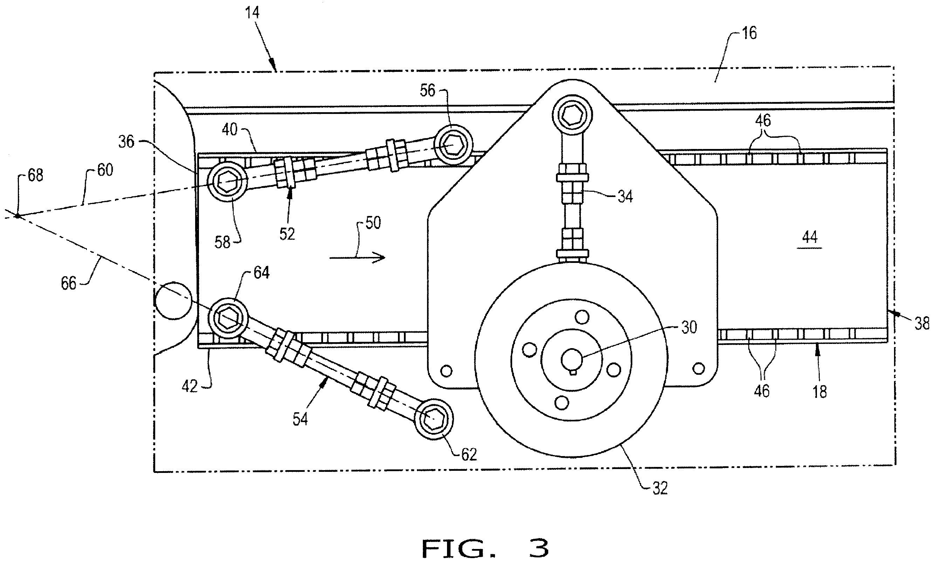

La boîte 18, illustrée plus clairement sur les figures 2 et 3, comprend un orifice d'admission 36 pour recevoir les grains et autre matière (MOG), un orifice de sortie 38 pour décharger les grains sur les rouleaux de transport 22, une paroi supérieure 40, une paroi inférieure 42 et une paire de parois latérales opposées 44. Le terme « boîte », tel qu'utilisé ici, vise à signifier au sens large n'importe quelle structure de type boîte ou structure fermée ayant au moins un orifice d'admission ouvert à une extrémité et un orifice de sortie ouvert à une extrémité opposée. Les grains ou le raisin sont introduits au niveau de l'extrémité d'admission, les grains sont secoués à l'intérieur de la boîte, les grains sont expulsés à travers des trous dans une paroi extérieure ou latérale de la boîte et les rafles, tiges, etc. sont déchargées par rapport à l'extrémité de sortie de la boîte. Donc une « boîte » peut prendre de nombreuses formes pour accomplir l'objectif général de séparation des grains.

La paroi supérieure 40 et la paroi inférieure 42 ont chacune une pluralité d'ouvertures 46 qui sont dimensionnées pour permettre le passage des grains à travers elles. La boîte 18 comprend également un plan central s'étendant dans le sens de la longueur 48 qui se situe généralement parallèlement à la paroi inférieure 42. Les tailles des ouvertures 46 dans la paroi supérieure 40 et la paroi inférieure 42 peuvent être différentes pour s'adapter au comportement différent des grains à chaque niveau. Il est également envisageable de faire varier la taille des ouvertures 46 entre l'avant et l'arrière de la boîte 18.

Selon un aspect de la présente invention, la boîte 18 est configurée de telle sorte que l'orifice d'admission 36 de la boîte 18 pivote autour d'un axe pivot virtuel positionné en amont de l'orifice d'admission 36, par rapport à une direction de déplacement 50 des grains et de la matière MOG à travers la boîte 18. Cela permet une amplitude accrue du mouvement oscillant de la boîte 18 au niveau de l'orifice d'admission 36 tout en fournissant une amplitude plus ample encore du mouvement oscillant de la boîte 18 au niveau de l'orifice de sortie 36.

Avec des conceptions d'érafloir de l'art antérieur, l'extrémité d'admission de la boîte est typiquement directement reliée de façon pivotante au châssis. Cela signifie que l'extrémité d'admission de l'érafloir pivote autour d'un axe donné au niveau de l'extrémité d'admission mais avec un mouvement faible ou nul lors de la translation au niveau de l'extrémité d'admission de la boîte. Le manque substantiel de mouvement vertical entraîne une action d'éraflage faible ou nulle dans cette zone. Au contraire, l'orifice d'admission 36 de la boîte 18 de la présente invention est couplée au châssis 16 de telle sorte qu'il se déplace tant par un mouvement de pivotement que par un mouvement de translation. Cela fournit une séparation améliorée des grains hors des rafles et des tiges tout en minimisant la quantité d'espace nécessaire pour la boîte oscillante de l'érafloir 14.

Plus particulièrement, au moins une liaison supérieure 52 et au moins une liaison inférieure 54 interconnectent la boîte 18 et le châssis 16. Chaque liaison supérieure 52 comprend une première extrémité 56 qui est reliée de façon pivotante au châssis 16, une seconde extrémité 58 qui est reliée de façon pivotante à la boîte 18 et un axe longitudinal 60. De façon similaire, chaque liaison inférieure 54 comprend une première extrémité 62 qui est reliée de façon pivotante au châssis 16, une seconde extrémité 64 qui est reliée de façon pivotante à la boîte 18 et un axe longitudinal 66. Dans le mode de réalisation illustré, chacune des liaisons supérieures 52 et chacune des liaisons inférieures 54 a un agencement de tige filetée et d'écrou de verrouillage fournissant les liaisons supérieure et inférieure 52 et 54 avec une longueur réglable. Cependant, les liaisons supérieure et inférieure 52 et 54 peuvent également être configurées avec des longueurs fixes. De plus, les liaisons supérieure et inférieure 52 et 54 peuvent également potentiellement être configurées sous la forme de vérins à gaz pour certaines applications, tels que les vérins pneumatiques (compressibles) ou hydrauliques (non compressibles).

Dans le mode de réalisation illustré, la boîte 18 est reliée au châssis 16 à l'aide d'une paire de liaisons supérieures 52 et d'une paire de liaisons inférieures 54. La paire de liaisons supérieures 52 et la paire de liaisons inférieures 54 ont chacune des secondes extrémités 58, 64 qui sont reliées de façon pivotante à une paroi latérale 44 respective au niveau d'un emplacement, à côté, c'est-à-dire au niveau de l'orifice d'admission 36 de la boîte 18.

Chacune des liaisons supérieures 52 forme avec le plan central 48 un angle α aigu et chacune des liaisons inférieures 54 forme avec le plan central 48 un angle aigu β. On notera que les angles α et β varient à mesure que l'orifice d'admission effectue un mouvement de translation vers le haut et le bas en fonctionnement, mais ils forment toujours un angle aigu par rapport au plan central 48. On notera également que la somme des angles α et β reste toujours aiguë.

En référence maintenant à la figure 3, il peut être observé que l'orifice d'admission 36 de la boîte 18 pivote autour d'un axe pivot virtuel 68 qui est positionné en amont par rapport à l'orifice d'admission 36, pris par rapport à la direction de déplacement 50 des grains et de la matière MOG à travers la boîte 18 depuis l'orifice d'admission 36 en direction de l'orifice de sortie. Lorsque vus depuis le côté de la boîte 18 comme le montre la figure 3, l'axe longitudinal de chaque liaison supérieure 52 et l'axe longitudinal de chaque liaison inférieure 54 se croisent au niveau de l'axe pivot virtuel 68 qui est positionné en amont de l'orifice d'admission 36 par rapport à la boîte 18, par rapport à la direction de déplacement 50 des grains et de la matière MOG à travers la boîte 18. En configurant de manière sélective l'angle α entre les liaisons supérieures 52 et le plan central 48 et l'angle β entre les liaisons inférieures 54 et le plan central 48, la distance du point de pivotement virtuel 68 par rapport à l'orifice d'admission 36 peut varier d'autant. Cependant, afin d'obtenir à la fois un mouvement de translation et de pivotement de la boîte 18 au niveau de l'orifice d'admission 36, le point de pivotement virtuel 68 doit toujours être positionné à l'extérieur de la boîte 18 et en amont de l'orifice d'admission 36. Lorsque l'érafloir est dans un état dit central, l'angle aigu α entre le plan central 48 et chaque liaison supérieure 52 peut être identique à l'angle aigu β entre le plan central et chaque liaison inférieure 54 ou différent de lui. On observera que l'axe pivot virtuel 68 n'a pas une position fixe en fonctionnement de l'érafloir mais constitue un axe pivot momentané flottant qui passe de haut en bas le long d'une courbe en amont de l'orifice d'admission 36, à une distance substantielle de lui.

En situation de fonctionnement de l'érafloir 14, les grappes de raisin comprenant rafles et tiges sont introduites dans l'orifice d'admission 36 de la boîte 18. L'entraînement à excentrique 20 déplace la boîte 18 dans des directions vers le haut et vers le bas à une vitesse de fonctionnement sélectionnée. L'amplitude de mouvement de la boîte 18 au niveau de l'orifice d'admission 36 est inférieure à l'amplitude de mouvement de la boîte au niveau d'un orifice de sortie 38. Le mouvement de la boîte 18 oscille entre une position inférieure dans laquelle le plan central 48 s'incline dans une direction orientée vers le bas (voir la figure 2) en direction de l'orifice de sortie 38 de la boîte 18 et une position supérieure dans laquelle le plan central 48 peut se situer généralement horizontalement (voir la figure 3). Lorsque la boîte 18 se déplace, l'orifice d'admission 36 se déplace tant en pivotement qu'en translation du fait de l'emplacement de l'axe pivot virtuel 68. L'inclinaison vers le bas de la boîte 18, ainsi que l'amplitude accrue de mouvement à mesure que les grappes de raisin se déplacent de l'orifice d'admission 36 en direction de l'orifice de sortie 38, amènent le raisin et la matière MOG en direction de l'orifice de sortie 38. Le raisin séparé est expulsé à travers les ouvertures 46 de la boîte 18 et tombe sur les rouleaux de transport 22 placés sous la boîte 18. Les rafles et les tiges séparées sont déchargées de l'orifice de sortie 38.

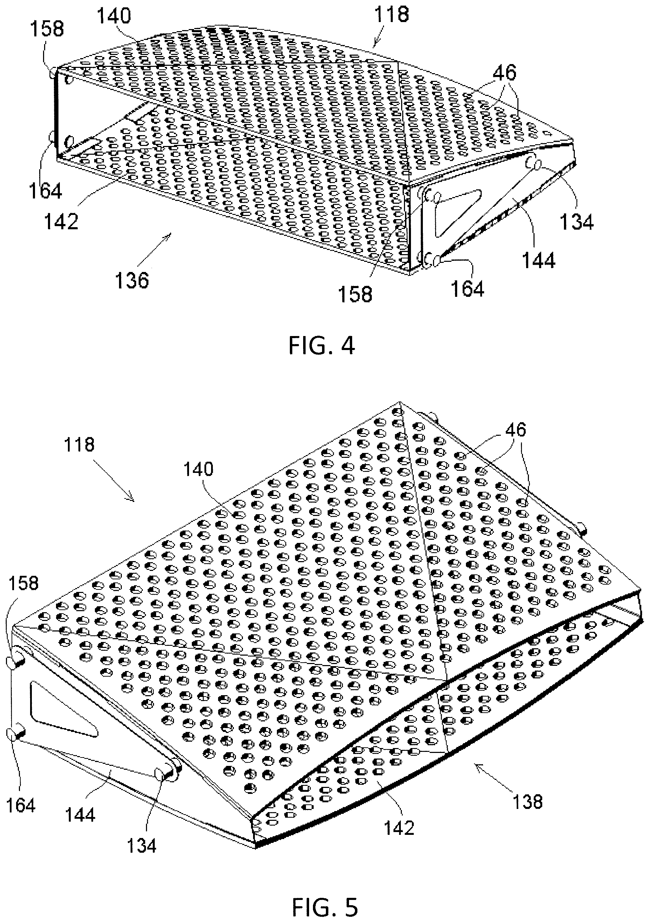

La boîte 18 illustrée sur les figures 1 à 3 a une forme globale cuboïde rectangulaire. Les figures 4 et 5 illustrent une autre forme de boîte possible pouvant être installée de façon avantageuse dans l'érafloir 14. La boîte 118 a un orifice d'admission 136 rectangulaire qui peut avoir la même taille que l'orifice d'admission 36 de la première boîte 18. La boîte 118 a une paroi supérieure 140 et une paroi inférieure 142 qui convergent vers l'arrière de la boîte 118, de telle sorte que l'orifice de sortie 138 ait une aire inférieure à l'aire de l'orifice d'admission 136. La forme et la taille de l'orifice d'admission 136 sont optimisées pour recevoir le raisin, les grappes et la matière MOG. L'aire diminuée de la section transversale en direction de l'arrière loge le volume diminué de la matière récoltée passant par l'orifice de sortie 138.

Les parois latérales 144 de la boîte 118 ont une forme sensiblement trapézoïdale. À côté, c'est-à-dire ici de part et d'autre, de l'orifice d'admission 136, les parois latérales 144 sont chacune pourvues d'un point de connexion supérieur et inférieur, par exemple un mentonnet supérieur 158 et un mentonnet inférieur 164, pour fixer l'extrémité frontale de la boîte à la seconde extrémité 58 de la liaison supérieure 52 et à la seconde extrémité 64 de la liaison inférieure 54, respectivement. Un troisième point de connexion, par exemple un mentonnet 134, est prévu plus près de l'orifice de sortie 138 pour fixer la liaison 34 de l'entraînement à excentrique 20.

L'orifice de sortie 138 n'a pas besoin de prendre une forme rectangulaire. Sa hauteur peut être plus importante au centre qu'à côté des parois latérales 144. Tel qu'illustré sur les figures 4 et 5, les bords arrière de la paroi supérieure 140 et de la paroi inférieure 142 peuvent être incurvés vers l'extérieur, c'est-à-dire convexes au niveau du centre de l'orifice de sortie 138. En variante, les bords peuvent prendre une forme de chevron, avec les bouts dirigés vers l'extérieur. Là où un orifice de sortie 138 incurvé est prévu, la paroi supérieure 140 et la paroi inférieure 142 peuvent comprendre une section triangulaire droite au milieu, avec une base au niveau de l'orifice d'admission 136 et des sections triangulaires incurvées au niveau des côtés de la section triangulaire centrale, les sections incurvées se rapprochant au niveau de l'orifice de sortie 138. Les parois incurvées 140, 142 concentrent la matière de récolte restante en direction du centre de la boîte lorsque celle-ci passe de l'orifice d'admission 136 vers l'orifice de sortie 138.

Même si la présente invention a été décrite par rapport à au moins un mode de réalisation, la présente invention peut en outre être modifiée à l'intérieur de la portée de la présente description telle que définie dans les limites des revendications annexées.

## Revendications

1. Erafloir (14) à utiliser de façon stationnaire dans un équipement de vinification, comprenant :
un châssis (16) configuré pour être installé de façon stationnaire dans l'équipement de vinification ;
une boîte (18) supportée par le châssis (16), la boîte (18) comprenant un orifice d'admission (36) pour recevoir des grains et autre matière (MOG) ;
un entraînement à excentrique (20) relié à la boîte (18) pour déplacer la boîte (18) de façon oscillante à l'intérieur du châssis (16) ;
**caractérisé par** :
au moins une liaison supérieure (52) interconnectant la boîte (18) et le châssis (16), ladite liaison supérieure (52) comprenant une première extrémité (56) reliée de façon pivotante au châssis (16), une seconde extrémité (58) reliée de façon pivotante à la boîte (18) et un axe longitudinal (60) ; et
au moins une liaison inférieure (54) interconnectant la boîte (18) et le châssis (16), ladite liaison inférieure (54) comprenant une première extrémité (62) reliée de façon pivotante au châssis (16), une seconde extrémité (64) reliée de façon pivotante à la boîte (18) et un axe longitudinal (66) ;
dans lequel, lorsque vus depuis un côté, l'axe longitudinal (60) de chaque liaison supérieure (52) et l'axe longitudinal (66) de chaque liaison inférieure (54) se croisent en un axe pivot virtuel (68) positionné en amont de l'orifice d'admission (36) par rapport à la boîte (18), par rapport à une direction de déplacement (50) des grains et de la matière (MOG) à travers la boîte (18).

2. Érafloir selon la revendication 1, **caractérisé en ce que**, en fonctionnement, l'orifice d'admission (36) de la boîte (18) se déplace de façon oscillante par l'intermédiaire à la fois d'un mouvement de pivotement et d'un mouvement de translation.

3. Érafloir selon l'une des revendications 1 ou 2, **caractérisé en ce que** chaque liaison supérieure (52) et chaque liaison inférieure (54) sont reliées de façon pivotante à la boîte (18) au niveau d'un emplacement situé à côté de l'orifice d'admission (36) de la boîte (18).

4. Érafloir selon l'une quelconque des revendications précédentes, **caractérisé en ce que** :
la boîte (18) a une paire de parois opposées (44) ;
la au moins une liaison supérieure (52) comprend une paire de liaisons supérieures, chaque liaison supérieure (52) étant reliée de façon pivotante à une paroi latérale (44) respective ; et
la au moins une liaison inférieure (54) comprend une paire de liaisons inférieures, chaque liaison inférieure (54) étant reliée de façon pivotante à une paroi latérale (44) respective.

5. Érafloir selon l'une quelconque des revendications précédentes, **caractérisé en ce que** la boîte (18) comprend une paroi supérieure (40), une paroi inférieure (42) et une paire de parois latérales opposées (44), la paroi supérieure (40) et la paroi inférieure (42) ayant chacune une pluralité d'ouvertures (46) qui sont dimensionnées pour permettre le passage des grains à travers elles et **en ce que** chacune des liaisons supérieures (52) et des liaisons inférieures (54) a une extrémité (58, 64) qui est reliée de façon pivotante à une des parois latérales respectives (44).

6. Érafloir selon l'une quelconque des revendications précédentes, **caractérisé en ce que** la boîte (18) comprend une paroi inférieure (42) et un plan central (48) s'étendant dans le sens de la longueur qui se situe généralement parallèlement à la paroi inférieure (42) et **en ce que** chaque liaison supérieure (52) et chaque liaison inférieure (54) se situent selon un angle aigu (a, β) par rapport au plan central.

7. Érafloir selon la revendication 6, **caractérisé en ce que**, en fonctionnement, le mouvement de la boîte (18) oscille entre une position inférieure dans laquelle le plan central (48) s'incline dans une direction orientée vers le bas en direction d'un orifice de sortie (38) de la boîte (18) et une position supérieure dans laquelle le plan central (48) se situe généralement horizontalement.

8. Érafloir selon l'une des revendications 6 ou 7, **caractérisé en ce que** lorsque l'érafloir (14) est dans un état dit central, l'angle aigu (α) entre le plan central (48) et chaque liaison supérieure (52) est identique à l'angle aigu (β) entre le plan central (48) et chaque liaison inférieure (54) ou différent de lui.

9. Érafloir selon l'une des revendications 6 à 8, **caractérisé en ce que** la somme des angles aigus (a, β) entre le plan central (48) et chaque liaison inférieure (54) et chaque liaison supérieure (52) est inférieure à 90°.

10. Érafloir selon l'une quelconque des revendications précédentes, **caractérisé en ce que** chaque liaison supérieure (52) et chaque liaison inférieure (54) a une longueur réglable.

11. Erafloir selon l'une des revendications 1 à 9, **caractérisé en ce que** chaque liaison supérieure (52) et chaque liaison inférieure (54) a une longueur fixe.

12. Érafloir selon l'une quelconque des revendications précédentes, **caractérisé en ce que** la boîte (18) a un orifice de sortie (38) et, en fonctionnement, l'amplitude de mouvement de la boîte (18) au niveau de l'orifice d'admission (36) est inférieure à l'amplitude de mouvement de la boîte (18) au niveau de l'orifice de sortie (38).

13. Érafloir selon l'une quelconque des revendications précédentes, **caractérisé en ce que** la boîte (118) a un orifice de sortie (138) ayant une surface inférieure à la surface de l'orifice d'admission (136).

14. Érafloir selon l'une quelconque des revendications précédentes, **caractérisé en ce que** la boîte (118) qui comprend une paroi supérieure (140), une paroi inférieure (142) et des parois latérales (144) a un orifice de sortie (138) de hauteur plus importante au niveau du centre de l'orifice de sortie (138) qu'à côté des parois latérales (144).

15. Érafloir selon l'une quelconque des revendications précédentes, **caractérisé en ce que** la boîte (118) ayant un orifice de sortie (138) délimité par des bords, les bords dits supérieur et inférieur de l'orifice de sortie (138) de la boîte (118) sont incurvés.

## Patentansprüche

1. Abbeermaschine (14) zur stationären Verwendung in einer Weinherstellungsanlage, umfassend:
ein Gehäuse (16), das konfiguriert ist, um auf stationäre Weise in der Weinherstellungsanlage installiert zu sein,
einen Kasten (18), der vom Gehäuse (16) getragen wird, wobei der Kasten (18) eine Zugangsöffnung (36) umfasst, um Beeren und anderes Material (MOG) aufzunehmen;
einen Exzenterantrieb (20), der mit dem Kasten (18) verbunden ist, um den Kasten (18) auf oszillierende Weise in das Innere des Gehäuses (16) zu verschieben;
**dadurch gekennzeichnet, dass**
mindestens eine obere Verbindung (52) den Kasten (18) und das Gehäuse (16) miteinander verbindet, wobei die obere Verbindung (52) ein erstes Ende (56) umfasst, das auf schwenkende Weise mit dem Gehäuse (16) verbunden ist, ein zweites Ende (58), das auf schwenkende Weise mit dem Kasten (18) verbunden ist, und eine Längsachse (60); und
mindestens eine untere Verbindung (54), die den Kasten (18) und das Gehäuse (16) miteinander verbindet, wobei die untere Verbindung (54) ein erstes Ende (62) umfasst, das auf schwenkende Weise mit dem Gehäuse (16) verbunden ist, und ein zweites Ende (64), das auf schwenkende Weise mit dem Kasten (18) verbunden ist, und eine Längsachse (66);
wobei, gesehen von einer Seite, sich die Längsachse (60) jeder oberen Verbindung (52) und die Längsachse (66) jeder unteren Verbindung (54) in einer virtuellen Schwenkachse (68) kreuzen, die vorgelagert von der Zugangsöffnung (36) mit Bezug auf den Kasten (18) mit Bezug auf eine Verschiebungsrichtung (50) der Beeren und des Materials (MOG) durch den Kasten (18) positioniert ist.

2. Abbeermaschine nach Anspruch 1, **dadurch gekennzeichnet, dass** sich im Betrieb die Zugangsöffnung (36) des Kastens (18) auf oszillierende Weise mit Hilfe sowohl einer Schwenkbewegung als auch einer Translationsbewegung verschiebt.

3. Abbeermaschine nach einem der Ansprüche 1 oder 2, **dadurch gekennzeichnet, dass** jede obere Verbindung (52) und jede untere Verbindung (54) auf schwenkende Weise mit dem Kasten (18) auf der Ebene einer Stelle verbunden sind, die sich an der Seite der Zugangsöffnung (36) des Kastens (18) befindet.

4. Abbeermaschine nach einem der vorhergehenden Ansprüche, **dadurch gekennzeichnet, dass**
der Kasten (18) ein Paar einander gegenüberliegender Wände (44) aufweist;
die mindestens eine obere Verbindung (52) ein Paar oberer Verbindungen umfasst, wobei jede obere Verbindung (52) auf schwenkende Weise mit einer entsprechenden seitlichen Wand (44) verbunden ist; und
die mindestens eine untere Verbindung (54) ein Paar unterer Verbindungen umfasst, wobei jede untere Verbindung (54) auf schwenkende Weise mit einer entsprechenden seitlichen Wand (44) verbunden ist.

5. Abbeermaschine nach einem der vorhergehenden Ansprüche, **dadurch gekennzeichnet, dass** der Kasten (18) eine obere Wand (40), eine untere Wand (42) und ein Paar gegenüberliegender seitlicher Wände (44) umfasst, wobei die obere Wand (40) und die untere Wand (42) jeweils eine Vielzahl von Öffnungen (46) aufweisen, die abgemessen sind, um den Durchgang der Beeren durch sie zu ermöglichen, und dadurch, dass jede der oberen Verbindungen (52) und der unteren Verbindungen (54) ein Ende (58, 64) aufweist, das auf schwenkende Weise mit einer der entsprechenden seitlichen Wände (44) verbunden ist.

6. Abbeermaschine nach einem der vorhergehenden Ansprüche, **dadurch gekennzeichnet, dass** der Kasten (18) eine untere Wand (42) und eine zentrale Ebene (48) umfasst, die sich in der Richtung der Länge erstreckt, die im Allgemeinen parallel zur unteren Wand (42) angeordnet ist, und dadurch, dass jede obere Verbindung (52) und jede untere Verbindung (54) gemäß einem spitzen Winkel (a, β) mit Bezug auf die zentrale Ebene angeordnet ist.

7. Abbeermaschine nach Anspruch 6, **dadurch gekennzeichnet, dass** im Betrieb die Bewegung des Kastens (18) zwischen einer unteren Position, in der sich die zentrale Ebene (48) in eine Richtung neigt, die nach unten in Richtung einer Ausgangsöffnung (38) des Kastens (18) ausgerichtet ist, und einer oberen Position, in der die zentrale Ebene (48) im Allgemeinen horizontal angeordnet ist, oszilliert.

8. Abbeermaschine nach einem der Ansprüche 6 oder 7, **dadurch gekennzeichnet, dass**, wenn sich die Abbeermaschine (14) in einem Zustand befindet, der als zentral bezeichnet wird, der spitze Winkel (α) in die zentrale Ebene (48) eintritt und jede obere Verbindung (52) identisch mit dem spitzen Winkel (β) zwischen der zentralen Ebene (48) und jeder unteren Verbindung (54) oder verschieden von dieser ist.

9. Abbeermaschine nach einem der Ansprüche 6 bis 8, **dadurch gekennzeichnet, dass** die Summe der spitzen Winkel (a, β) zwischen der zentralen Ebene (48) und jeder unteren Verbindung (54) und jeder oberen Verbindung (62) kleiner als 90° ist.

10. Abbeermaschine nach einem der vorhergehenden Ansprüche, **dadurch gekennzeichnet, dass** jede obere Verbindung (52) und jede untere Verbindung (54) eine einstellbare Länge aufweist.

11. Abbeermaschine nach einem der Ansprüche 1 bis 9, **dadurch gekennzeichnet, dass** jede obere Verbindung (52) und jede untere Verbindung (54) eine feste Länge aufweist.

12. Abbeermaschine nach einem der vorhergehenden Ansprüche, **dadurch gekennzeichnet, dass** der Kasten (18) eine Ausgangsöffnung (38) aufweist und in Betrieb die Amplitude der Bewegung des Kastens (18) auf dem Niveau der Zugangsöffnung (36) kleiner als die Amplitude der Bewegung des Kastens (18) auf der Ebene der Ausgangsöffnung (38) ist.

13. Abbeermaschine nach einem der vorhergehenden Ansprüche, **dadurch gekennzeichnet, dass** der Kasten (118) eine Ausgangsöffnung (138) aufweist, die eine geringere Oberfläche als die Oberfläche der Zugangsöffnung (136) aufweist.

14. Abbeermaschine nach einem der vorhergehenden Ansprüche, **dadurch gekennzeichnet, dass** der Kasten (118), der eine obere Wand (140), eine untere Wand (142) und seitliche Wände (144) umfasst, eine Ausgangsöffnung (138) mit einer bedeutenderen Höhe auf dem Niveau des Zentrums der Ausgangsöffnung (138) als an der Seite der seitlichen Wände (144) aufweist.

15. Abbeermaschine nach einem der vorhergehenden Ansprüche, **dadurch gekennzeichnet, dass** der Kasten (118) eine Ausgangsöffnung (138) aufweist, die von Rändern begrenzt ist, die Ränder, bezeichnet als oberer und unterer Rand der Ausgangsöffnung (138) des Kastens (118), gekrümmt sind.

## Claims

1. A destemmer (14) for stationary use in winemaking equipment, comprising:
a frame (16) configured to be installed in a stationary manner in the winemaking equipment;
a box (18) supported by the frame (16), the box (18) comprising an inlet port (36) for receiving stems and other material (MOG);
an eccentric drive (20) connected to the box (18) for driving the box (18) in an oscillating manner inside the frame (16);
**characterized by:**
at least one upper link (52) interconnecting the box (18) and the frame (16), said upper link (52) comprising a first end (56) pivotably connected to the frame (16), a second end (58) pivotably connected to the box (18) and a longitudinal axis (60); and
at least one lower link (54) interconnecting the box (18) and the frame (16), said lower link (54) comprising a first end (62) pivotably connected to the frame (16), a second end (64) pivotably connected to the box (18) and a longitudinal axis (66);
wherein, when seen from one side, the longitudinal axis (60) of each upper link (52) and the longitudinal axis (66) of each lower link (54) intersect at a virtual pivot axis (68) positioned upstream of the inlet port (36) relative to the box (18), with respect to a movement direction (50) of the seeds and of the material (MOG) through the box (18).

2. The destemmer according to claim 1, **characterized in that**, during operation, the inlet port (36) of the box (18) moves in an oscillating manner by means both of a pivoting movement and of a translational movement.

3. The destemmer according to one of claims 1 or 2, **characterized in that** each upper link (52) and each lower link (54) are connected pivotably to the box (18) at a location located next to the inlet port (36) of the box (18).

4. The destemmer according to any one of the preceding claims, **characterized in that**:
the box (18) has a pair of opposite walls (44);
the at least one upper link (52) comprises a pair of upper links, each upper link (52) being connected pivotably to a respective side wall (44); and
the at least one lower link (54) comprises a pair of lower links, each lower link (54) being pivotably connected to a respective side wall (44).

5. The destemmer according to any one of the preceding claims, **characterized in that** the box (18) comprises an upper wall (40), a lower wall (42) and a pair of opposite side walls (44), the upper wall (40) and the lower wall (42) each having a plurality of openings (46) which are sized to allow the passage of seeds through them and **in that** each of the upper links (52) and the lower links (54) has an end (58, 64) which is pivotably connected to one of the respective side walls (44).

6. The destemmer according to any one of the preceding claims, **characterized in that** the box (18) comprises a lower wall (42) and a central plane (48) extending in the length direction which is generally located parallel to the lower wall (42) and **in that** each upper link (52) and each lower link (54) are located along an acute angle (α, β) relative to the central plane.

7. The destemmer according to claim 6, **characterized in that**, during operation, the movement of the box (18) oscillates between a lower position in which the central plane (48) tilts in a direction oriented downward toward an outlet port (38) of the box (18) and an upper position in which the central plane (48) is located generally horizontally.

8. The destemmer according to one of claims 6 or 7, **characterized in that** when the destemmer (14) is in a so-called central state, the acute angle (α) between the central plane (48) and each upper link (52) is identical to the acute angle (β) between the central plane (48) and each lower link (54) or different therefrom.

9. The destemmer according to one of claims 6 to 8, **characterized in that** the sum of the acute angles (α, β) between the central plane (48) and each lower link (54) and each upper link (52) is less than 90°.

10. The destemmer according to any one of the preceding claims, **characterized in that** each upper link (52) and each lower link (54) has an adjustable length.

11. The destemmer according to one of claims 1 to 9, **characterized in that** each upper link (52) and each lower link (54) has a fixed length.

12. The destemmer according to any one of the preceding claims, **characterized in that** the box (18) has an outlet port (38) and, during operation, the movement amplitude of the box (18) at the inlet port (36) is smaller than the movement amplitude of the box (18) at the outlet port (38).

13. The destemmer according to any one of the preceding claims, **characterized in that** the box (118) has an outlet port (138) having a surface which is smaller than the surface of the inlet port (136).

14. The destemmer according to any one of the preceding claims, **characterized in that** the box (118), which comprises an upper wall (140), a lower wall (142) and side walls (144), has an outlet port (138) of greater height at the center of the outlet port (138) than next to the side walls (144).

15. The destemmer according to any one of the preceding claims, **characterized in that** the box (118) having an outlet port (138) delimited by edges, the so-called upper and lower edges of the outlet port (138) of the box (118) are curved.
